# EUROPÄISCHE PATENTANMELDUNG

(11) **EP 2 053 544 A1**
(43) Veröffentlichungstag der Anmeldung: **29.04.2009**
(21) Anmeldenummer: 07119054.0
(22) Anmeldetag: 23.10.2007
(51) Int. Cl.: G06K 19/07, G06K 19/077

(54) **Verfahren zur Herstellung eines Smart Labels mit laserbeschriftbarem Klebeetikett**

(71) Anmelder: F. Hoffmann-La Roche AG, 4070 Basel (CH); Roche Diagnostics GmbH, 68305 Mannheim (DE)
(72) Erfinder: Sacherer, Klaus Dieter, 67281 Kirchheim (DE)
(74) Vertreter: Hörschler, Wolfram Johannes

(57) **Zusammenfassung**

Es wird ein Verfahren zur Herstellung eines Hochfrequenzetiketts (110) auf einem Gegenstand (112) vorgeschlagen. Das Verfahren weist folgende Schritte auf:
- mindestens ein Transponder (140) wird auf einer Oberfläche des Gegenstandes (112) fixiert, wobei der Transponder (140) mindestens einen Hochfrequenzchip (116) sowie mindestens eine Antenne (118) und mindestens eine Trägerfolie (120) aufweist;
- mindestens ein Decketikett (138) wird auf dem Transponder (140) fixiert, wobei das Decketikett (138) mindestens eine von dem Transponder (140) weg weisende beschriftbare Oberfläche (132) aufweist.

## Beschreibung

### Gebiet der Erfindung

Die Erfindung betrifft ein Verfahren und eine Vorrichtung zur Herstellung eines Hochfrequenzetiketts. Derartige Verfahren und Vorrichtungen lassen sich vorzugsweise einsetzen, um Verpackungen für Testelemente zum Nachweis von Analyten in Proben, beispielsweise für diagnostische Testelemente, zu kennzeichnen. Auch für andere Arten von Gegenständen sind das erfindungsgemäße Verfahren und die Vorrichtung jedoch einsetzbar.

### Stand der Technik

In vielen Bereichen der Technik werden Hochfrequenzetiketten in Form von so genannten "Smart Labels", also intelligenten Etiketten, eingesetzt. Derartige Etiketten umfassen in der Regel ein RFID-System (Radio Frequency Identification, Identifizierung durch Radiowellen). Derartige RFID-Systeme ermöglichen berührungslose Lesevorgänge und/oder Schreibvorgänge über Radiowellen. Dies bedeutet, dass die Smart Label, im Gegensatz zu herkömmlichen, beispielsweise bedruckten und rein optisch auslesbaren Etiketten, nach Belieben mit Informationen beschrieben werden können, ohne dass eine Berührung der Etiketten erforderlich ist. Weiterhin ist auch ein Auslesen der Etiketten möglich, ohne dass direkter Sichtkontakt zwischen einem Lesegerät und dem Etikett besteht. Zusätzlich kann natürlich eine sichtbare Oberfläche des Smart Labels beschriftet, beispielsweise bedruckt oder mit einem Laser beschrieben, werden, um optisch wahrnehmbare Informationen aufzubringen.

Diese vorteilhaften Eigenschaften von RFIDs und insbesondere von Smart Labels werden beispielsweise im Bereich der Güterverfolgung im Speditionswesen, in der Waren-Logistik, im Bereich des Diebstahlschutzes, im Kampf gegen die Produktpiraterie oder in anderen Bereichen der Technik und des täglichen Lebens ausgenutzt. So empfiehlt beispielsweise die US-Arzneimittelbehörde FDA den Einsatz von RFID-Techniken zum Kampf gegen gefälschte Medikamente. Auch temperaturempfindliche Medizinprodukte werden vielfach mit RFID-Etiketten mit Sensorfunktion an den Transportbehältern eingesetzt. Die Aufzeichnung kann beispielsweise eine Verletzung von Transportbedingungen dokumentieren und kann somit den Patienten vor falsch transportierten Arzneimitteln oder Medizinprodukten schützen.

Kern der Smart Label, welche im Folgenden auch als Hochfrequenzetiketten bezeichnet werden, sind ein oder mehrere so genannte Transponder. Transponder, welche im Englischen auch mit RFID-Tags gleichgesetzt werden, setzen sich sprachlich aus den Worten "Transceiver" und "Responder" zusammen. So weisen Transponder üblicherweise einen Hochfrequenzchip auf, welcher beispielsweise und typischerweise als analoger Schaltkreis ausgestaltet sein kann. Üblicherweise ist dieser Hochfrequenzchip zum Empfangen und Senden (transceive) von Daten ausgestaltet und weist weiterhin in der Regel einen Speicher, beispielsweise einen permanenten (nichtflüchtigen) Speicher auf, welcher über Radiowellen angesprochen werden kann, also über eine Antenne. Transponder können relativ hohe Datenmengen (beispielsweise von einem einzelnen Bit bis hin zu mehreren Kilobyte) tragen.

Transponder sind in verschiedenen Ausführungen bekannt. Beispielsweise sind so genannte aktive Transponder bekannt, bei welchen der Transponder über eine eigene Energiequelle verfügt. Weiter verbreitet sind jedoch so genannte passive Transponder, bei welchen der Transponder über ein externes Radiofeld (Hochfrequenzfeld) mit Energie versorgt wird. Die folgende Beschreibung ist auf die Verwendung von passiven Transpondern fokussiert, wobei jedoch auch aktive Transponder eingesetzt werden können.

Auch bezüglich des Frequenzbereiches unterscheiden sich Transponder grundsätzlich. Eine übliche Frequenz ist die Arbeitsfrequenz nach ISO 15693 von 13,56 MHz. Auch in anderen Frequenzbereichen sind jedoch Transponder bekannt, beispielsweise im Bereich zwischen 865 und 869 MHz. Trotz leicht unterschiedlicher Funktionsweisen dieser Transponder für unterschiedliche Frequenzbereiche werden die Frequenzen im Nachfolgenden einheitlich als "Hochfrequenz" bezeichnet. Der Schwerpunkt der vorliegenden Anmeldung soll auf der Arbeitsfrequenz von 13,56 MHz liegen, ohne hierdurch jedoch die Verwendung anderer Frequenzen auszuschließen.

Transponder weisen neben mindestens einem Hochfrequenzchip, welcher, wie oben beschrieben, beispielsweise einen oder mehrere Speicher und/oder einen oder mehrere analoge Schaltkreise aufweisen kann, mindestens eine Antenne auf. Die Antenne und der Hochfrequenzchip sind üblicherweise auf einer Trägerfolie (wobei es sich sinngemäß auch um mehrere Folien handeln kann) aufgebracht. Die Antenne und der Hochfrequenzchip werden gemeinsam häufig auch als "Inlay" bezeichnet. Die Trägerfolie mit dem Inlay kann zusätzlich noch durch eine Abdeckschicht (zum Beispiel eine Papier-Schutzschicht und/oder eine PET-Folie) geschützt sein.

Die Antenne kann beispielsweise einer Spule mit mehreren Windungen aufweisen, zum Beispiel eine Kupfer- und/oder Aluminiumspule. Die Antennenspule hat dabei die Aufgabe, den Datenempfang von einem Lesegerät zu ermöglichen. Weiterhin können über die Antenne auch Signale an das Lesegerät übertragen werden. Als dritte Funktion kommt bei den oben beschriebenen passiven Transpondern zusätzlich die Funktion des Energieempfangs hinzu, da beispielsweise über die Antenne ein Strom im Transponder induziert werden kann, dessen elektrische Energie beispielsweise in einem Kondensator oder einem anderen Energiespeicher gespeichert werden kann.

Üblicherweise sind zwei Enden der Antenne (wobei sinngemäß auch mehrere Antennen vorgesehen sein können) mit dem mindestens einen Hochfrequenzchip verbunden. Dieser Hochfrequenzchip (im Folgenden auch als IC oder Chip bezeichnet) kann alle weiteren Bauteile enthalten und somit beispielsweise die Funktion eines Energieempfangs und einer Speicherung der Energie, eines Sendens und/oder Empfangens von Daten und/einer Datenspeicherung in einem Datenspeicher umfassen.

Wie oben beschrieben, können Hochfrequenzetiketten zusätzlich eine beschriftbare Oberfläche aufweisen, so dass die Hochfrequenzetiketten zusätzlich zu einer Datenspeicherung, weiterhin auch auf "konventionelle" Weise, also beispielsweise mittels eines Druckvorgangs, beschriftet werden können.

Bisher aus dem Stand der Technik bekannte Prozesse für die Herstellung von Hochfrequenzetiketten weisen in der Regel eine Vielzahl von Einzelschritten auf. In der Regel sind dabei mindestens vier Teilschritte vorgesehen. Im ersten Verfahrensschritt wird der Hochfrequenzchip hergestellt, beispielsweise mittels eines bekannten Halbleiterprozesses. Üblicherweise wird in einem zweiten Verfahrensschritt, separat von der Herstellung des Hochfrequenzchips, eine Antenne hergestellt. Dies kann beispielsweise durch ein Ätzverfahren auf der Trägerfolie erfolgen, beispielsweise durch Ätzen von Kupfer oder Aluminium in einer Reel-to-Reel-Technologie. In einem dritten Schritt wird dann der Hochfrequenzchip mit der Antenne verbunden (Bonding), wobei verschiedene Bondingverfahren zum Einsatz kommen können. Beispielsweise sind hier Flip-Chip-Technologien möglich, sowie Technologien, welche auf Widerstandsschweißen, Thermokompressionsschweißen, Crimp-Technologien oder anderen Arten von Verbindungstechniken oder Kombinationen von Verbindungstechniken beruhen.

In einem vierten Verfahrensschritt wird dann eine Konfektionierung durchgeführt, in welcher die Smart Labels an die jeweilige Verwendung angepasst werden. Hierbei kann der Transponder beispielsweise mit einem Haftkleber versehen werden und kann zusätzlich mit einer beschriftbaren Oberfläche versehen werden.

Diese Vielzahl von Einzelschritten beinhaltet jedoch zahlreiche Nachteile, welche die Anwendung von Hochfrequenzetiketten in der Praxis erschweren. So ist ein wesentlicher Nachteil des Verfahrens darin zu sehen, dass der beschriebene Prozess äußerst aufwendig und komplex ist. So müsste ein Hersteller von Hochfrequenzetiketten Technologien aus dem Bereich der Halbleitertechnologie, der Laminiertechniken, der Bonding-Techniken, der Reel-to-Reel-Technologie und der Druck- bzw. Dickschichttechnologie vorhalten. Nur wenige Hersteller sind in der Lage, diese Einzeltechnologien aus einer Hand anzubieten, was wiederum die Logistik bei der Herstellung der Hochfrequenzetiketten in der Regel sehr komplex gestaltet. Zudem ist der beschriebene Konfektionierungsschritt, welcher in der Regel kundenspezifisch erfolgt, vergleichsweise aufwendig und erhöht die Kosten herkömmlicher Verfahren zusätzlich.

Ein weiterer Nachteil bekannter Verfahren besteht in der erschwerten Qualitätskontrolle. So können insbesondere bei der Herstellung des Transponders und bei der Herstellung der beschriftbaren Oberflächen Fehler auftreten, welche in der Regel erst nach der Konfektionierung bemerkt werden können, so dass häufig eine Verwerfung bereits fertig konfektionierter, wertvoller Hochfrequenzetiketten erforderlich ist.

### Aufgabe der Erfindung

Aufgabe der vorliegenden Erfindung ist es daher, ein Verfahren zur Herstellung eines Hochfrequenzetiketts auf einem Gegenstand bereitzustellen, welches die Nachteile bekannter Verfahren zumindest weitgehend vermeidet. Insbesondere soll das Verfahren kostengünstig sein und soll die Wertschöpfungskette bei der Herstellung der Hochfrequenzetiketten vereinfachen.

### Beschreibung der Erfindung

Diese Aufgabe wird durch die Erfindung mit den Merkmalen der unabhängigen Ansprüche gelöst. Vorteilhafte Weiterbildungen der Erfindung, welche einzeln oder in Kombination realisiert sein können, sind in den Unteransprüchen dargestellt. Der Wortlaut sämtlicher Ansprüche wird hiermit zum Inhalt der vorliegenden Beschreibung gemacht.

Das Verfahren ist, im Gegensatz zu den bekannten Verfahren, bei welchen fertig konfektionierte Transponderetiketten auf Oberflächen aufgeklebt werden, zweistufig ausgestaltet. Dabei wird in einer ersten Stufe des Verfahrens mindestens ein Transponder auf einer Oberfläche des Gegenstandes fixiert. Dieser Transponder kann beispielsweise mit einem Inlay gemäß der obigen Beschreibung ausgestaltet sein und weist mindestens einen Hochfrequenzchip sowie mindestens eine Antenne und mindestens eine Trägerfolie auf. Wie oben beschrieben, kann der mindestens eine Hochfrequenzchip beispielsweise mindestens einen analogen Schaltkreis und/oder mindestens einen Datenspeicher, vorzugsweise einen nichtflüchtigen Datenspeicher, umfassen. Der mindestens eine Hochfrequenzchip kann beispielsweise in herkömmlicher Siliziumtechnik hergestellt werden oder kann, alternativ oder zusätzlich, auch andere Herstellungstechniken implementieren. So können insbesondere auch in Polymertechnologie (d.h. unter Verwendung leitender und/oder halbleitender Polymere) hergestellte Hochfrequenzchips zum Einsatz kommen. Diese Technologie vereinfacht die Herstellung des Transponders erheblich, da beispielsweise keine aufwendigen Flip-Chip-Technologien zum Bonding des Hochfrequenzchips auf der Antenne erforderlich sind. Auch die Antenne kann in dieser Technologie hergestellt sein und kann beispielsweise unter Verwendung leitender Polymere erzeugt werden. Auch Hybridtechnologien, beispielsweise Technologien mit organischen Hochfrequenzchips und herkömmlich hergestellten, beispielsweise geätzten, Antennen ist möglich. Insoweit kann weitgehend auf die obige Beschreibung der bekannten Technologien verwiesen werden. Die Herstellung des Transponders selbst kann Teil des vorgeschlagenen Verfahrens sein, kann jedoch auch in einem separaten Herstellungsverfahren realisiert werden, so dass der Transponder zugekauft werden kann.

In einem zweiten Verfahrensschritt wird schließlich ein Decketikett auf der Trägerfolie fixiert, wobei das Decketikett mindestens eine von der Trägerfolie weg weisende beschriftbare Oberfläche aufweist.

Das vorgeschlagene Verfahren bietet gegenüber den bekannten Herstellungsverfahren den Vorteil, dass die Aufbringung des Transponders und die Aufbringung des Decketiketts getrennt erfolgen können. Transponder und Decketikett, wobei es sich in beiden Fällen um Etiketten handeln kann, können getrennt voneinander beschafft, gelagert und gehandhabt werden. Weiterhin können Transponder und Decketikett voneinander getrennt auf die gleiche Stelle auf der Oberfläche des Gegenstandes aufgebracht werden, beispielsweise in zwei getrennten automatischen Verspendungsschritten. Auf diese Weise können beide Aufbringungen voneinander getrennt optimiert werden.

Weiterhin lässt sich durch das vorgeschlagene Verfahren der vorangehend beschriebene Konfektionierungsschritt vorzugsweise vollständig einsparen. Auf diese Weise lassen sich circa 5-8 Cent pro Etikett einsparen, was bei üblichen Kosten für Hochfrequenzetiketten von über 50 Cent pro Hochfrequenzetikett eine erhebliche Einsparung bedeutet.

Weiterhin lässt sich durch das Einsparen des Konfektionierungsschrittes eine zusätzliche Belastung für den Transponder, insbesondere den empfindlichen Hochfrequenzchip, vermeiden. Dadurch kann der Ausschuss bei der Produktion verringert werden und das Risiko für das fertige Produkt kann stark verringert werden.

Zudem können bei der getrennten Aufbringung Decketiketten verwendet werden, welche nicht notwendigerweise auf die Konfektionierung abgestimmt sein müssen. Auf diese Weise erhöht sich das Spektrum der einsetzbaren Klebeetiketten, so dass auf eine Vielzahl von am Markt verfügbaren Decketiketten beispielsweise mit gewünschten Beschriftungseigenschaften, zurückgegriffen werden kann.

Besonders bevorzugt ist es dabei, wenn der mindestens eine Transponder und das mindestens eine Decketikett in unterschiedlichen Verfahrensschritten hergestellt werden, wobei in einem ersten Fixierungsschritt der Transponder auf der Oberfläche des Gegenstandes fixiert wird und in einem anschließenden zweiten Fixierungsschritt das Decketikett auf dem Transponder fixiert wird. Diese Trennung der Herstellungsschritte verstärkt die oben beschriebenen Vorteile und bewirkt insbesondere, dass Transponder und Decketikett getrennt optimierbar sind. Insbesondere kann der Transponder vor und/oder nach dem ersten Fixierungsschritt einem Transponderkontrollschritt unterzogen werden, wobei überprüft werden kann, ob der Transponder fehlerhaft ist. Beispielsweise kann dieser Transponderkontrollschritt nach einem Verspenden des Transponders, also nach einem Fixieren des Transponders auf der Oberfläche des Gegenstandes, erfolgen. Auch eine Transponderkontrolle vor dem Verspenden oder beim Verspenden ist möglich, was von dem Ausdruck "vor und/oder nach" umfasst sein soll. Vorteilhafterweise werden als fehlerhaft erkannte Transponder aussortiert, bevor ein Decketikett auf diese Transponder aufgebracht wird oder bevor diese Transponder auf die Oberfläche aufgebracht werden. Auf diese Weise lässt sich insbesondere ein Decketikett einsparen, was, da die Decketiketten mit ihren beschriftbaren Eigenschaften in der Regel einen erheblichen Kostenfaktor darstellen, wiederum zu einer erheblichen Kostenreduktion des Gesamtprozesses führen kann.

Der Transponder selbst kann, wie oben beschrieben, vorzugsweise von einem externen Zulieferer bezogen werden und komplett bei diesem Zulieferer, beispielsweise einem Betrieb, welcher auf einen Bonding-Prozess spezialisiert ist, hergestellt werden. Die Kontrolle des Transponders in dem Transponderkontrollschritt kann verschiedene Arten der Kontrolle umfassen, beispielsweise eine einfache Sichtkontrolle (zum Beispiels mittels eines Bilderkennungssystems, welches die optische Erscheinung des Transponders mit einer Vorgabe vergleicht) und/oder es können andere Kontrollen eingesetzt werden, wie beispielsweise elektrische Kontrollen. Diese elektrischen Kontrollen können beispielsweise auf die Funktionen des Transponders zurückgreifen und können beispielsweise ein berührungsloses Einschreiben in den Transponder und/oder ein berührungsloses Auslesen aus dem Transponder beinhalten.

Analog kann, alternativ oder zusätzlich, auch das Decketikett vor und/oder nach dem zweiten Fixierungsschritt (wobei der Ausdruck "vor und/oder nach" auch eine Gleichzeitigkeit umfassen kann) einem Etikettenkontrollschritt unterzogen werden, in welchem überprüft wird, ob das Decketikett fehlerhaft ist. Wiederum können vorzugsweise als fehlerhaft erkannte Decketiketten aussortiert werden, bevor diese auf dem Transponder fixiert würden. Auf diese Weise lässt sich wiederum, sollte ein Decketikett schadhaft oder fehlerhaft sein, der Verlust eines Transponders vermeiden, und es lassen sich Kosten einsparen.

Zur Fixierung des Transponders auf der Oberfläche des Gegenstandes kann der Transponder insbesondere mindestens eine erste Klebeschicht aufweisen. Diese erste Klebeschicht kann insbesondere einen Acrylatkleber aufweisen, beispielsweise mit einer Dicke von 5 - 100 µm (vorzugsweise circa 20 µm). Diese Klebeschicht kann beispielsweise großflächig über das Inlay mit der mindestens einen Antenne und dem mindestens einen Hochfrequenzchip sowie die verbleibende freiliegende Trägerfolie aufgebracht werden. So kann beispielsweise ein Schichtaufbau entstehen, welcher, von der Oberfläche des Gegenstandes her, folgende Schichtreihenfolge aufweisen kann: Klebeschicht - Antenne und Hochfrequenzchip - Trägerfolie. Auf diese Weise kann ein selbstklebendes Transponderetikett erzeugt werden, mit einem Inlay, welches zum Gegenstand hinweist.

Alternativ zu der beschriebenen Schichtreihenfolge kann auch eine Abdeckschicht vorgesehen sein, welche das Inlay mit dem Hochfrequenzchip und der Antenne schützt und insbesondere den Hochfrequenzchip abdeckt. Auch die Antenne kann ganz oder teilweise durch die Abdeckschicht abgedeckt werden. In diesem Fall kann vorzugsweise die oben beschriebene Klebeschicht auf die von dem Hochfrequenzchip abgewandte Seite der Abdeckschicht aufgebracht werden, so dass eine folgende Schichtreihenfolge entstehen kann: Klebeschicht - Abdeckschicht - Inlay mit Hochfrequenzchip und Antenne - Trägerfolie. Als Abdeckschicht kann beispielsweise eine PET-Folie (PolyethylenTerephthalat) oder ein anderes Kunststoff und/oder Papiermaterial oder eine Kombination mehrerer Schichtmaterialien verwendet werden. Auch andere Ausgestaltungen sind jedoch denkbar.

Wie oben beschrieben, kann die Antenne beispielsweise eine Kupferantenne, eine Aluminiumantenne, eine Goldantenne oder eine aus einem anderen Metall hergestellte Antenne umfassen. Wie ebenfalls dargestellt ist jedoch auch die Ausgestaltung mittels leitfähiger Polymere denkbar. Die Antenne kann beispielsweise mittels eines Ätzverfahrens, eines Druckverfahrens, eines Laminierverfahrens, eines Heißprägeverfahrens oder eines anderen Schichtverfahrens oder einer Kombination derartiger Verfahren aufgebracht bzw. strukturiert werden.

Zur Fixierung des Decketiketts auf dem Transponder kann das Decketikett eine zweite Klebeschicht aufweisen. Diese zweite Klebeschicht kann beispielsweise wiederum einen Acrylatkleber aufweisen, wobei jedoch, analog zur ersten Klebeschicht, wiederum auch die Verwendung anderer Arten von Klebern oder Klebstoffkombinationen möglich ist. Die erste Klebeschicht und/oder die zweite Klebeschicht können beispielsweise mit einer Schutzfolie versehen sein, so dass Transponder und/oder Decketikett jeweils als Halbfertigware erzeugt, gelagert, gehandhabt, angeliefert und verspendet werden können. Vor der jeweiligen Fixierung des Transponders auf der Oberfläche und/oder der Fixierung des Decketiketts auf dem Transponder können die jeweiligen Schutzfolien entfernt werden. Der gesamte Prozess kann beispielsweise manuell und/oder automatisiert oder teilautomatisiert durchgeführt werden, beispielsweise in einem Rollenprozess.

Zur Aufbringung der Decketiketten auf die Transponder kann insbesondere ein Verfahrensschritt genutzt werden, bei welchem das Decketikett zunächst großflächig (d.h. nicht auf die Größe des Transponders angepasst) auf dem Transponder fixiert wird. Dies kann beispielsweise dergestalt erfolgen, dass mehrere Transponder gleichzeitig von dem großflächigen Decketikett bedeckt werden, beispielsweise mehrere auf mehreren Gegenständen fixierte Transponder gleichzeitig. Anschließend kann das Decketikett gestanzt werden, so dass die endgültige Form des Decketiketts entsteht. Beispielsweise kann diese Form derart gewählt werden, dass dieses Decketikett von seiner lateralen Erstreckung her über den Transponder hinausragt. Alternativ wären jedoch auch Decketiketten möglich, welche kleiner sind als der Transponder oder welche eine gleiche Größe wie der Transponder aufweisen. Nach dem Stanzen (wobei das Stanzen sinngemäß auch einen beliebigen anderen Schneideprozess beinhalten kann, beispielsweise ein Laserschneiden und/oder ein mechanisches Schneiden) wird das Decketikett abgegittert. Unter "Abgittern" ist dabei ein Vorgang zu verstehen, bei welchem überschüssige Decketikett-Bestandteile des ursprünglichen großflächigen Decketiketts von dem bzw. den Gegenständen abgezogen werden. Der Name rührt da her, dass diese überschüssigen Bestandteile, da die eigentlichen Decketiketten in der Regel eine quadratische Form oder eine Rechteckform aufweisen, eine Gitterform haben. Auf diese Weise lassen sich mittels des vorgeschlagenen Verfahrens auch gleichzeitig eine Mehrzahl von Transpondern mit Decketiketten versehen, so dass der vorgeschlagene Prozess auch für eine Großserienfertigung gut geeignet ist. Auch hier macht sich wiederum somit die zweiteilige Ausgestaltung des vorgeschlagenen Verfahrens positiv bemerkbar, da diese das Verfahren stark vereinfacht und die Herstellungskosten senkt.

Ein besonderer Schwerpunkt der vorliegenden Erfindung liegt insbesondere auch darauf, dass das mindestens eine Decketikett mindestens eine von der Trägerfolie weg weisende beschriftbare Oberfläche aufweist. Diese beschriftbare Oberfläche sorgt dafür, dass das Hochfrequenzetikett nicht nur elektronisch als Datenspeicher dienen kann, sondern dass beispielsweise auch mit dem Auge oder mit einem anderen optischen Lesegerät wahrnehmbare Informationen auf der Oberfläche des Decketiketts aufgebracht werden können. Beispielsweise können Seriennummer, Barcodes, Typenbezeichnungen oder ähnliche Informationen über den Gegenstand oder über Bestandteile des Gegenstandes auf der Oberfläche des Decketiketts verzeichnet werden.

Besonders bevorzugt ist es, wenn die beschriftbare Oberfläche mittels mindestens eines der folgenden Beschriftungsverfahren beschriftbar ist: einem Laserbeschriftungsverfahren; einem Laserdruckverfahren, einem Thermotransferdruckverfahren; einem Tintenstrahldruckverfahren. Dementsprechend kann die beschriftbare Oberfläche auf diese Beschriftungsverfahren angepasste Eigenschaften aufweisen, welche dem Fachmann aus dem Gebiet dieser Beschriftungstechniken bekannt sind.

Besonders bevorzugt ist es dabei, wenn ein Laserbeschriftungsverfahren eingesetzt wird. So kann das Decketikett beziehungsweise die beschriftbare Oberfläche des Decketiketts mindestens eine Laser-sensitive Schicht aufweisen, welche ausgestaltet ist, um mindestens eine optisch wahrnehmbare Eigenschaft bei einer Einwirkung eines Laserstrahls zu ändern. Diese mindestens eine optisch wahrnehmbare Eigenschaft kann eine oder mehrere Eigenschaften umfassen. Insbesondere kann bei Einwirkung des Laserstrahls eine Farbänderung, insbesondere eine Farbänderung auf Grund einer thermochemischen Reaktion und/oder eines Thermochromieeffektes in dem Laser-sensitivem Material, ein Materialabtrag, bei welchem mindestens ein Teil der Laser-sensitiven Schicht abgetragen wird, ein Ätzschritt, bei welchem mindestens ein Teil der Laser-sensitiven Schicht verdampft wird oder eine Kombination der genannten und/oder anderer optisch wahrnehmbarer Effekte auftreten. Werden Abtragseffekte genutzt, bei welchen ein Teil der Laser-sensitiven Schicht abgetragen wird, so kann zusätzlich der optische Effekt dadurch unterstützt werden, dass durch den Laserabtrag eine unter der teilweise abgetragenen Schicht liegende Farbschicht (beispielsweise eine schwarze Schicht, eine weiße Schicht und/oder eine bunte Schicht) freigelegt wird, so dass die Freilegung beispielsweise mittels des Auges erkennbar ist. Derartige Laser-sensitive Materialien sind dem Fachmann aus dem Bereich der Laserbeschriftung bekannt. Besonders bevorzugt ist es, wenn die mindestens eine Laser-sensitive Schicht eine Sensitivität bei einer infraroten Wellenlänge, vorzugsweise einer Wellenlänge von 10,6 µm (CO₂-Laser) und/oder 1064 nm (Nd:YAG) aufweist. Diese Wellenlängen sind insbesondere geeignet, um thermochemische Materialien, beispielsweise thermochrome Materialien, zu beschriften, welche bei Einwirkung infraroter Strahlung Farbreaktionen durchführen. Auch für die genannten Materialabtrags-Verfahren lassen sich die infraroten Wellenlängen gut einsetzen. Zudem sind derartige Laser technisch ausgereift und für den großtechnischen Produktionseinsatz erhältlich. Die mindestens eine Laser-sensitive Schicht kann insbesondere eine Schichtdicke zwischen 0,3 µm - 10 µm aufweisen, wobei Schichtdicken im Bereich von 2,5 µm bevorzugt sind. Diese Schichtdicken sind sowohl für thermochrome Beschriftungen als auch für Beschriftungen, welche auf einem Materialabtrag beruhen, geeignet.

Das Decketikett kann weiterhin mindestens eine Trägerschicht mit einem Abdeckmaterial aufweisen. Dieses Abdeckmaterial kann beispielsweise ein Papiermaterial und/oder ein Kunststoffmaterial umfassen. Auch ein mehrschichtiger Aufbau ist denkbar.

Besonders bevorzugt ist es weiterhin, wenn vor dem Fixieren des Transponders auf der Oberfläche des Gegenstandes mindestens eine Vertiefung in diese Oberfläche des Gegenstandes eingebracht wird. Diese Vertiefung soll insbesondere derart ausgestaltet sein, dass diese den Transponder ganz oder teilweise aufnimmt. Besonders bevorzugt ist es, wenn die Vertiefung derart dimensioniert wird, dass die beschriftbare Oberfläche nach Fertigstellung des Hochfrequenzetiketts im Wesentlichen eben ist, d.h. beispielsweise lediglich Unebenheiten im Bereich von weniger als 500 µm oder sogar weniger als 100 µm aufweist. Auf diese Weise wird eine anschließende Beschriftung der beschriftbaren Oberfläche stark vereinfacht, so dass auch einfache Beschriftungsvorrichtungen eingesetzt werden können. Die mindestens eine Vertiefung kann nachträglich in den mindestens einen Gegenstand eingebracht werden, beispielsweise durch ein mechanisches Verfahren (z.B. ein Fräs- und/oder Bohrverfahren) und/oder kann bereits bei der Herstellung des Gegenstandes vorgesehen werden. So können beispielsweise Gegenstände aus Kunststoffmaterialien hergestellt werden, so dass bereits bei der Herstellung die Vertiefung in die Oberfläche eingebracht wird. Dies kann beispielsweise durch eine entsprechende Ausgestaltung eines Werkzeuges für einen Spritzgießprozess und/oder eine andere Art eines Pressvorgangs realisiert werden.

Wie oben beschrieben ist es besonders bevorzugt, das erfindungsgemäße Verfahren in einer der dargestellten Ausführungsformen für einen Gegenstand zu verwenden, der mindestens ein Testelement zum Nachweis mindestens eines Analyten in einer Probe aufweist. So kann der Gegenstand beispielsweise eine Verpackung für ein derartiges Testelement umfassen. Das Testelement kann insbesondere derart eingerichtet sein, dass dieses bei Anwesenheit des nachzuweisenden Analyten mindestens eine nachweisbare Eigenschaft (z.B. eine optische und/oder eine elektrochemische Eigenschaft) ändert. Derartige Testelemente sind beispielsweise aus dem Bereich der medizinischen Diagnostik (z.B. der Blutzuckermessung) bekannt. Derartige Testelemente können beispielsweise in Form von Teststreifen und/oder in Form von Testbändern vorliegen. So können beispielsweise Testelement-Magazine, z.B. Stangen-, Reihen-, Trommel- und Bandmagazine mit einem oder mehreren derartiger Testelemente mittels des oben beschriebenen Verfahrens mit einem Hochfrequenzetikett versehen werden. In dieses Hochfrequenzetikett können eine oder mehrere Informationen, welche die Testelemente betreffen, eingeschrieben werden. Insbesondere kann es sich dabei um Chargeninformationen handeln, also um Informationen, welche Spezifika des bzw. der Testelemente beinhalten. Auf diese Weise lassen sich durch Auslesen des Testelements diese Chargeninformationen beispielsweise automatisch von einem Analysegerät, welches die Testelemente anschließend verwendet, wiedergewinnen und verwerten. Auch andere Arten von Informationen, welche das bzw. die Testelemente betreffen, können eingeschrieben werden. Beispielsweise können Verfallsdatum, Verwendungszweck, Handhabungsbedingungen, Kombinationen dieser Informationen oder weitere Informationen in den Transponder eingeschrieben werden.

Zusätzlich kann auch die mindestens eine beschriftbare Oberfläche mit einer optisch wahrnehmbaren Information beschriftet werden, was beispielsweise in einem Beschriftungsschritt erfolgen kann. Diese Beschriftung kann beispielsweise optisch lesbare Informationen über das Testelement bzw. die Testelemente enthalten, wie beispielsweise ebenfalls wiederum Verfallsdatum, Art der Testelemente etc. Auch ein Barcode kann vorgesehen sein, welcher es einem Barcodeleser ermöglicht, beispielsweise wiederum Chargeninformationen auszulesen. Besonders bevorzugt ist es dabei, wenn der Beschriftungsschritt zur Beschriftung der beschriftbaren Oberfläche und der Schreibschritt zum Einschreiben der Informationen in den Transponder zumindest näherungsweise gleichzeitig durchgeführt werden. Beispielsweise kann hierfür eine Schreibvorrichtung verwendet werden, in welcher sowohl der Beschriftungsschritt als auch der Schreibschritt durchgeführt werden. Unter "im Wesentlichen gleichzeitig" ist dabei auch ein zeitlicher Überlapp sowie ein leichter zeitlicher Versatz, vorzugsweise um nicht mehr als einige Sekunden, zu verstehen.

Weiterhin wird eine Vorrichtung zur Herstellung eines Hochfrequenzetiketts auf einem Gegenstand vorgeschlagen, welche vorzugsweise insbesondere das oben beschriebene, erfindungsgemäße Verfahren in einer oder mehreren der beschriebenen Ausführungsformen umsetzen kann. Insofern kann für die möglichen Ausgestaltungen der Vorrichtung weitgehend auf die obigen Beschreibungen der möglichen Verfahrensvarianten verwiesen werden.

Die Vorrichtung weist mindestens eine Transponderverspendevorrichtung auf, um einen Transponder mit mindestens einem Hochfrequenzchip, mit mindestens einer Antenne und mit mindestens einer Trägerfolie auf einer Oberfläche eines Gegenstandes zu fixieren. Weiterhin weist die Vorrichtung mindestens eine Decketikettverspendevorrichtung auf, welche eingerichtet ist, um auf dem auf der Oberfläche des Gegenstandes fixierten Transponder mindestens ein Decketikett mit mindestens einer von der Trägerfolie des Transponders weg weisenden beschriftbaren Oberfläche zu fixieren.

Vorteilhafterweise kann die Vorrichtung weiterhin mindestens eine Transponderkontrollvorrichtung aufweisen, um fehlerhafte Transponder zu erkennen und gegebenenfalls auszusortieren. Weiterhin kann, alternativ oder zusätzlich, auch mindestens eine Etikettenkontrollvorrichtung vorgesehen sein, um fehlerhafte Decketiketten zu erkennen und gegebenenfalls auszusortieren.

Alternativ oder zusätzlich zu dem oben beschriebenen Verfahren und der Vorrichtung in einer der dargestellten Ausführungsformen werden allgemein auch Verbesserungen in der Wertschöpfungskette der Herstellung von Hochfrequenzetiketten vorgeschlagen. Wie dargestellt, erfolgt die Herstellung von Hochfrequenzetiketten in der Regel derart, dass ein oder mehrere Chiphersteller den mindestens einen Hochfrequenzchip herstellen, während, unabhängig hiervon, ein oder mehrere Antennenhersteller die mindestens eine Antenne herstellen und bereitstellen. Der mindestens eine Hochfrequenzchip und die mindestens eine Antenne werden anschließend an ein drittes Unternehmen geliefert, den sogenannten Bonder, bei welchem der Chip auf die Antenne gebondet wird, d.h. entsprechend elektrisch leitend mit dieser verbunden wird. Dabei kann, wie oben dargestellt, die mindestens eine Antenne auf der mindestens einen Trägerfolie aufgebracht sein, was die Handhabung der Antenne erheblich erleichtert. Anschließend wird die derartige Einheit, welche den Chip und die damit elektrisch leitend verbunde Antenne aufweist und welche bereits die funktionellen Eigenschaften eines RFID-Transponders aufweisen kann, an einen sogenannten Konvertierer geliefert, welcher in der Regel das vierte Glied in der Wertschöpfungskette darstellt. Bei diesem Konvertierer werden die Antenne und der damit verbundene Chip mit einem beschriftbaren Klebeetikett versehen, so dass das fertige Hochfrequenzetikett entsteht.

Wie oben dargestellt, ist diese herkömmliche Wertschöpfungskette vergleichsweise komplex. Es wird, in einem weiteren Aspekt der Erfindung, somit vorgeschlagen, zwei oder mehr der Schritte in dieser Wertschöpfungskette zusammenzufassen. Insbesondere wird vorgeschlagen, dass der Bonder gleichzeitig auch die Aufgabe des Konvertierers übernimmt. So kann insbesondere in ein und demselben Betrieb, anschließend an ein Bonden des Chips auf die Antenne, die derart erzeugte Einheit mit einem beschriftbaren Etikett versehen werden. Dies kann beispielsweise in ein und derselben Produktionslinie erfolgen oder auch in verschiedenen Stationen beim selben Hersteller.

Alternativ könnte auch der Konvertierer die Aufgaben des Bonders mitübernehmen und somit den angelieferten Hochfrequenzchip und die angelieferte Antenne zunächst bonden, bevor diese mit einem beschriftbaren Decketikett versehen werden.

Auf diese Weise lassen sich, durch Zusammenfassen ein oder mehrerer Schritte dieser Wertschöpfungskette, erhebliche Einsparungen erzielen. Zudem wird der Koordinationsaufwand, welcher üblicherweise bei der Koordination zahlreicher Zulieferer und Zulieferprodukte erforderlich ist, erheblich gesenkt, da die Zahl der Beteiligten in der Wertschöpfungskette und somit die Zahl der aufeinander abzustimmenden Größen reduziert wird.

Neben den beschriebenen beiden Schritten des Bondens und Konvertierens, welche zusammengefasst werden können, lassen sich naturgemäß auch noch weitere Schritte der Herstellung des Hochfrequenzetikettes bei einem Hersteller zusammenfassen. So kann beispielsweise zusätzlich noch die Antennenherstellung und/oder die Chipherstellung beim selben Hersteller erfolgen, was weitere Einsparungen bedeuten kann.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweils offenbarten Merkmale für sich alleine oder zu mehreren in beliebiger Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigt:
- Figur 1: einen dem Stand der Technik entsprechenden Aufbau eines Hochfrequenzetiketts;
- Figur 2: einen erfindungsgemäßen Aufbau eines Hochfrequenzetiketts;
- Figur 3: ein Ausführungsbeispiel eines erfindungsgemäßen Verfahrens zur Herstellung eines Hochfrequenzetiketts auf einem Gegenstand; und
- Figur 4: ein Ausführungsbeispiel einer Vorrichtung zur Herstellung eines Hochfrequenzetiketts auf einem Gegenstand.

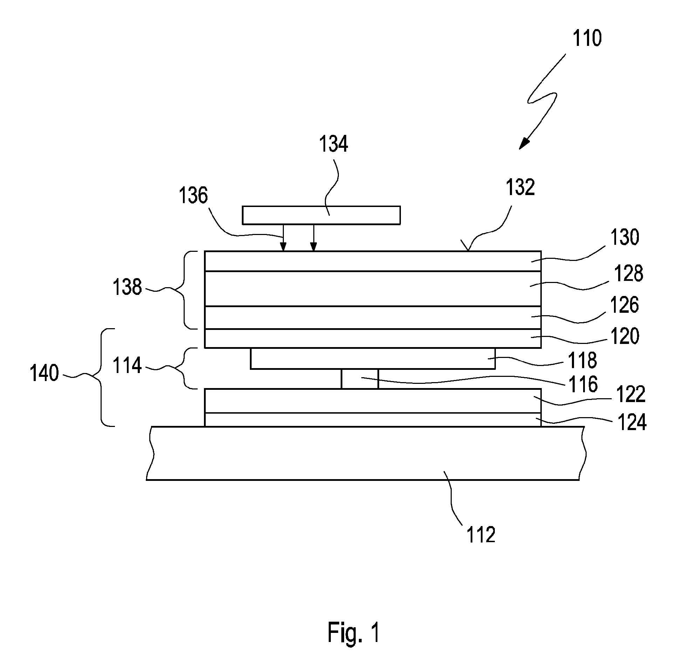

In Figur 1 ist ein dem Stand der Technik entsprechender Aufbau eines Hochfrequenzetiketts 110 schematisch dargestellt. Das Hochfrequenzetikett 110 ist in diesem Ausführungsbeispiel auf der Oberfläche eines Gegenstands 112 aufgebracht, bei welchem es sich beispielsweise um einen Verbrauchsartikel, ein Medizinprodukt oder einen anderen Gegenstand, beispielsweise aus einem der oben genannten Anwendungsbereiche, handeln kann.

Zentrales Element des Hochfrequenzetiketts 110 ist ein Inlay 114, welches sich in diesem Ausführungsbeispiel aus einem Hochfrequenzchip 116 und einer Antenne 118 zusammensetzt. Daneben können jedoch noch weitere Bauteile vorgesehen sein. Im Folgenden sei angenommen, dass es sich bei dem Hochfrequenzchip 116 um einen herkömmlichen, beispielsweise auf Silizium-Technologie basierenden integrierten Schaltkreis (IC) handelt. Wie oben beschrieben, können jedoch auch andere Techniken zum Einsatz kommen, beispielsweise, alternativ oder zusätzlich, organische Elektroniken, wie beispielsweise organische Transistorschaltungen. Der Hochfrequenzchip 116 ist gebondet auf die Antenne 118, bei welcher es sich beispielsweise um eine Antenne aus einem Kupfer- und/oder Aluminium-Material handeln kann. Insbesondere kann die Antenne 118 eine Antennenspule aufweisen, welche typischerweise auf einer Trägerfolie 120 aufgebracht ist. Beispielsweise kann es sich bei dieser Trägerfolie 120 um eine PET-Folie handeln, beispielsweise mit einer Dicke von 30 - 40 µm.

Auf der dem Gegenstand 112 zugewandten Seite des Inlays 114 ist das Inlay 114 durch eine Abdeckschicht 122 abgedeckt. Weiterhin kann eine erste Klebeschicht 124 auf der dem Gegenstand 112 zugewandten Seite der ersten Abdeckschicht 122 vorgesehen sein, um das Hochfrequenzetikett 110 auf der Oberfläche des Gegenstandes 112 zu fixieren. Es sei jedoch darauf hingewiesen, dass auch andere Arten der Fixierung denkbar sind, beispielsweise eine Laminierung, eine magnetische Fixierung oder weitere Fixierungsarten.

Oberhalb der Trägerfolie 120 schließt sich auf der dem Gegenstand 112 abgewandten Seite der Trägerfolie 120 eine zweite Klebeschicht 126 an. In beiden Fällen, also bei der ersten Klebeschicht 124 und der zweiten Klebeschicht 126 kann es sich um eine Schicht eines Acrylatklebers handeln. Durch die zweite Klebeschicht 126 ist eine Trägerschicht 128 in Form eines Abdeckmaterials vorgesehen. Beispielsweise kann es sich dabei um eine PET-Folie handeln, beispielsweise eine Folie mit einer Dicke von ca. 50 µm.

Auf der Trägerschicht 128 ist schließlich eine Schicht eines Laser-sensitiven Materials 130 aufgebracht, welche beispielsweise eine Dicke von 2,5 µm aufweisen kann. Dieses Laser-sensitive Material 130 bildet eine beschriftbare Oberfläche 132 des Hochfrequenzetiketts 110, welche mittels eines Lasers 134 durch Laserstrahlung 136 beschriftet werden kann. Beispielsweise kann diese Beschriftung durch Initiierung von Thermochromieeffekten in dem Laser-sensitiven Material 130 erfolgen, oder es kann, alternativ oder zusätzlich, ein Materialabtrag des Laser-sensitiven Materials 130 durch die Laserstrahlung 136 erfolgen, so dass in der beschriftbaren Oberfläche 132 eine optisch wahrnehmbare Änderung auftritt. Beispielsweise kann diese optisch wahrnehmbare Änderung dadurch erfolgen, dass das Laser-sensitive Material 130 lokal durch die Laserstrahlung 136 vollständig abgetragen wird, wobei Farbunterschiede zwischen dem Laser-sensitiven Material 130 und der darunter liegenden Trägerschicht 128 wahrgenommen werden können. Zu diesem Zweck können das Laser-sensitive Material 130 und die Trägerschicht 128 unterschiedliche Farben aufweisen, oder es kann, alternativ oder zusätzlich, eine zusätzliche Schicht zwischen der Trägerschicht 128 und dem Laser-sensitiven Material 130 eingefügt werden, beispielsweise eine farbige Schicht oder eine weiße Schicht, welche einen Kontrast zur Farbe bzw. zu dem Farbton des Laser-sensitiven Materials 130 bildet.

Die zweite Klebeschicht 126, die Trägerschicht 128 und das Laser-sensitive Material 130 bilden in diesem Aufbau gemeinsam ein Decketikett 138, wohingegen das Inlay 114, die Trägerfolie 120, die Abdeckschicht 122 und die erste Klebeschicht 124 einen Transponder 140 bilden. Wie oben beschrieben, wird in der Regel bei herkömmlichen Verfahren das Hochfrequenzetikett 110 durch verschiedene Hersteller hergestellt, wobei in der Regel der Transponder 140 und das Decketikett 138 getrennt hergestellt, dann konfektioniert und schließlich fertig konfektioniert auf den Gegenstand 112 aufgebracht werden.

Wie eingangs beschrieben, werden Hochfrequenzetiketten 110 gemäß dem Ausführungsbeispiel in Figur 1 oder ähnliche Ausführungsbeispiele üblicherweise in einem mehrstufigen Prozess, unter Mitwirkung zahlreicher Beteiligter durchgeführt. So wird üblicherweise der mindestens eine Hochfrequenzchip 116 von einem Chiphersteller hergestellt, und die Antenne 118 von einem separaten Antennenhersteller. Beide Bestandteile 116, 118 werden separat an einen dritten Zulieferer, den sogenannten Bonder, geliefert, welcher den Hochfrequenzchip 116 auf die Antenne 118 bondet und somit das Inlay 114 herstellt. Dieses Inlay wird als separate Einheit an einen Konvertierer als vierten Hersteller in der Wertschöpfungskette geliefert, welcher beispielsweise die Trägerschicht 128 und das laser-sensitive Material 130 aufbringt.

In einem, alternativ oder zusätzlich zu den im Folgenden beschriebenen Verfahrensschritten eines bevorzugten Verfahrens realisierbaren Aspekt der Erfindung, wird vorgeschlagen, die Wertschöpfungskette durch Zusammenfassen verschiedener Herstellungsschritte zu vereinfachen. So kann insbesondere, wie oben dargestellt, das Bonden und das Konvertieren zusammengefasst werden, so dass ein Bonder beispielsweise auch die Konvertierung übernehmen kann, oder ein Konvertierer das Bonden. So könnte beispielsweise ein Verfahren derart ausgestaltet sein, dass von einem Antennenhersteller die Trägerfolie 120 als Bandware mit aufgebrachten Antennen 118 angeliefert wird. Von einem Chiphersteller werden Hochfrequenzchips 116 angeliefert, welche beispielsweise in Form großer Halbleiterwaver mit zahlreichen darauf befindlichen Hochfrequenzchips 116 geliefert werden. Beim kombinierten Hersteller wird nun in einem Verfahrensschritt, beispielsweise mittels eines Pick-and-Place-Verfahrens, jeweils ein (gegebenenfalls auch mehrere) Hochfrequenzchips 116 auf die Einheit Trägerfolie 120 - Antenne 118 aufgebracht, und es erfolgt eine elektrische Kontaktierung (Bonding). Die derart gebondeten Einheiten können in einem weiteren Verfahrensschritt mit der Abdeckschicht 122 und/oder der ersten Klebeschicht 124 versehen werden. In einem weiteren Verfahrensschritt wird das Decketikett 138 aufgebracht, oder es kann das Inlay 114, zuzüglich gegebenenfalls der Trägerfolie 120 und/oder der Abdeckschicht 122 und/oder der ersten Klebeschicht 124, auf dieses Decketikett 138 aufgebracht werden, was technisch zumindest näherungsweise gleichbedeutend ist.

Das Aufbringen des Decketiketts 138 kann beispielsweise dadurch erfolgen, dass bereits fertig geformte Decketiketten 138 aufgebracht werden, oder es kann das Decketikett 138 als Bandware aufgebracht werden, wobei anschließend ein Ausstanzen und Abgittern erfolgen kann, um die fertig geformten Hochfrequenzetiketten 110 zu erzeugen.

Die dargestellten Verfahrensschritte können in separaten Anlagen ein und desselben kombinierten Herstellers (Bonder und/oder Konvertierer) erfolgen, oder es können ein oder mehrere Verfahrensschritte, bis hin zu allen Verfahrensschritten, auch in einem In-line-Prozess zusammengefasst werden.

Weiterhin sei darauf hingewiesen, dass die Reihenfolge der genannten Verfahrensschritte auch vertauscht werden kann. So kann beispielsweise zunächst eine Aufbringung der Decketiketten 138 erfolgen, und anschließend das Aufbringen der Abdeckschicht 122 und/oder der ersten Klebeschicht 124.

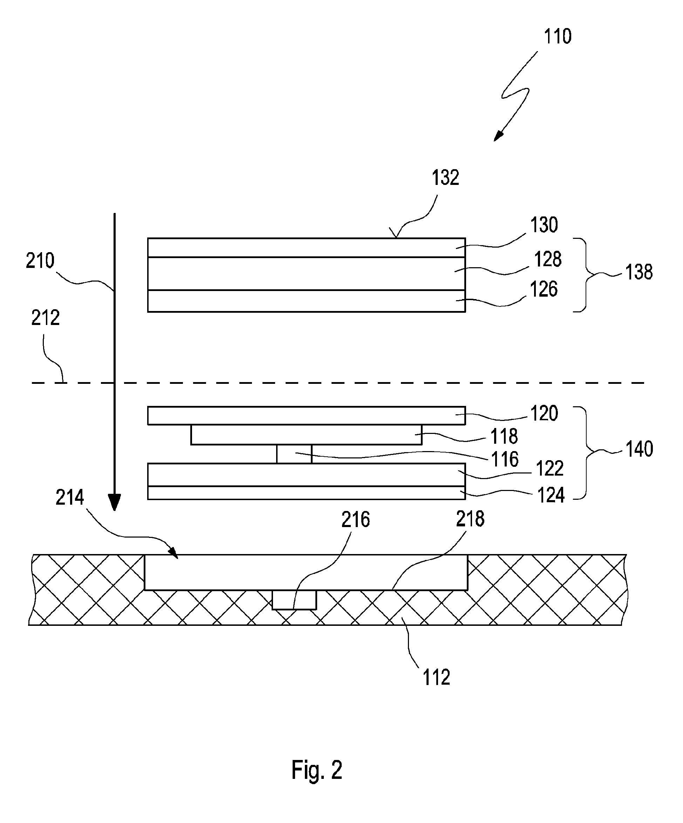

Dieses Verfahren der Vereinfachung der Wertschöpfungskette bei der Herstellung herkömmlicher Hochfrequenzetiketten 110 kann alternativ oder zusätzlich zu dem im Folgenden anhand der Figuren 2, 3 und 4 beschriebenen, erfindungsgemäßen Verfahren eingesetzt werden. Im Folgenden wird auf diese logistische Zusammenfassung von Funktionen in der Wertschöpfungskette nicht näher eingegangen.

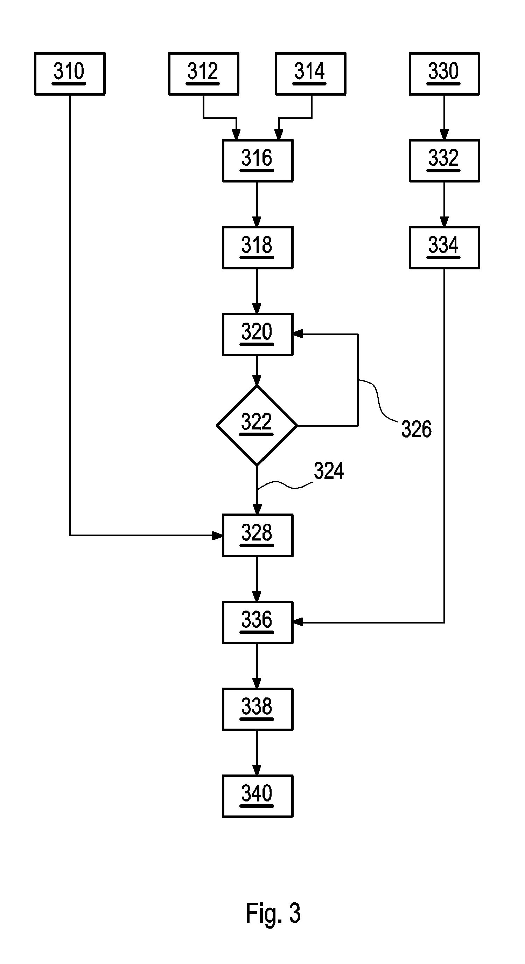

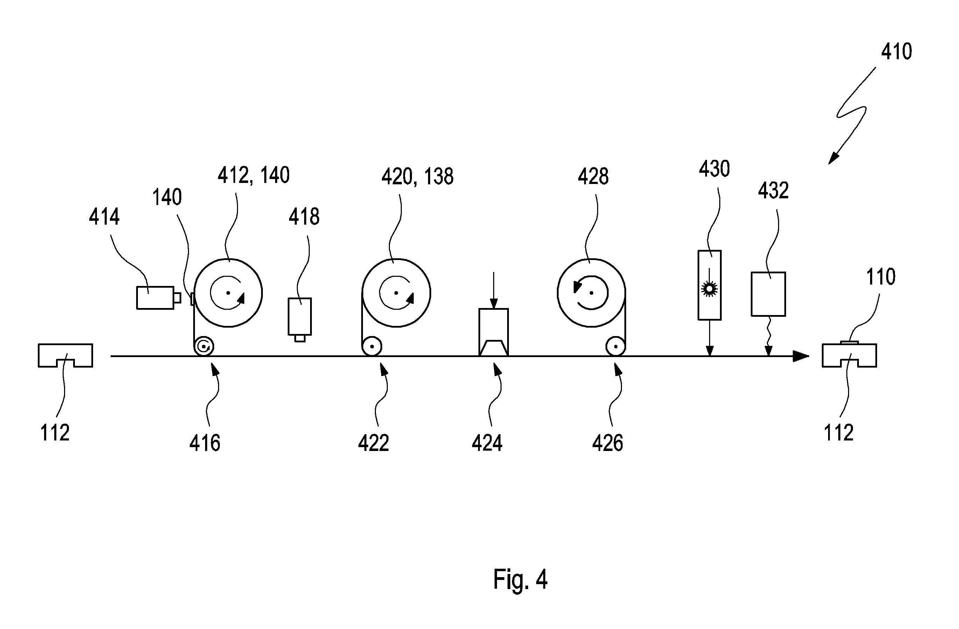

In den Figuren 2 bis 4 ist ein Ausführungsbeispiel eines erfindungsgemäßen Aufbaus eines Hochfrequenzetiketts 110 (Figur 2), ein Ausführungsbeispiel eines Verfahrens zur Herstellung des Hochfrequenzetiketts 110 (Figur 3) und ein mögliches Ausführungsbeispiel einer Vorrichtung zur Herstellung des Hochfrequenzetiketts 110 (Figur 4) gezeigt. Diese Figuren sollen im Folgenden gemeinsam erläutert werden.

In Figur 2 ist zu erkennen, dass erfindungsgemäß das Hochfrequenzetikett 110 zweiteilig aufgebaut ist, wobei ein Transponder 140 und ein Decketikett 138 separat auf die Oberfläche des Gegenstandes 112 aufgebracht werden. Dabei ist die Laminierrichtung symbolisch mit der Bezugsziffer 210 bezeichnet, und die Trennung zwischen der Aufbringung des Transponders 140 und des Decketiketts 138 ist mit der Bezugsziffer 212 bezeichnet.

Der Transponder 140 und das Decketikett 138 können beispielsweise analog zu der obigen Beschreibung aufgebaut sein. Das Decketikett 138 ist durch die zweite Klebeschicht 126 als selbstklebendes Decketikett 138 ausgestaltet, wobei die zweite Klebeschicht eine Dicke von beispielsweise 20 µm aufweisen kann. Auch der Transponder 140 kann durch die erste Klebeschicht 124 als selbstklebender Transponder 140 ausgestaltet sein, wobei beispielsweise wieder ein Acrylatkleber mit einer Dicke von 20 µm verwendet werden kann. Für die übrigen Ausgestaltungen der einzelnen Komponenten kann beispielhaft auf die obige Beschreibung der Figur 1 verwiesen werden.

Im Unterschied zur Figur 1 ist in Figur 2 die Oberfläche des Gegenstandes 112, bei welchem es sich beispielsweise um ein Kassettengehäuse einer Bandkassette für bandförmige Testelemente für den Nachweise von Blutglukose handeln kann, mit einer Vertiefung 214 versehen. Die Vertiefung 214 weist eine zentrale Aussparung 216 auf, welche derart dimensioniert ist, dass in dieser der Hochfrequenzchip 116, welcher in der Regel das voluminöseste Bauteil des Transponders 140 ist, aufgenommen werden kann. An die zentrale Aussparung 216 schließt sich eine flache Aussparung 218 an, in welche die übrigen Bestandteile des Transponders 140 aufgenommen werden können. Die zentrale Aussparung 216 bewirkt, dass, wenn der Transponder 140 auf die Oberfläche des Gegenstands 112 aufgebracht ist, die Oberfläche des Transponders 140 vorzugsweise im Wesentlichen eben ist. Die Abdeckschicht 122 und die erste Klebeschicht 124 können insbesondere so dünn und so flexibel ausgestaltet sein, dass diese sich problemlos an die Kontur der Vertiefung 214 anpassen. Dabei kann die Oberfläche des Transponders 140 bündig mit der Oberfläche des Gegenstands 112 außerhalb der Vertiefung 214 abschließen, oder es kann beispielsweise die Oberfläche des Transponders 140 noch vertieft gegenüber dieser Oberfläche des Gegenstands 112 sein, so dass erst nach dem Aufbringen des Decketiketts 138 eine bündige Oberfläche mit der Oberfläche des Gegenstands 112 entsteht. Auch andere Ausgestaltungen sind jedoch denkbar. Die ebene Oberfläche des Transponders 140 und/oder des Decketiketts 138 erleichtert eine spätere Beschriftung der beschriftbaren Oberfläche 132.

Bei der Herstellung des Aufbaus gemäß Figur 2 oder eines ähnlichen Aufbaus kann beispielsweise ein in Figur 3 schematisch dargestelltes Verfahren eingesetzt werden. Die einzelnen Verfahrensschritte müssen nicht notwendigerweise in der dargestellten Reihenfolge durchgeführt werden, und es können weitere, in Figur 3 nicht aufgeführte Verfahrensschritte durchgeführt werden. Zudem ist die vorgegebene Reihenfolge der Verfahrensschritte gemäß Figur 3 nicht zwingend erforderlich, und es können beispielsweise einzelne Verfahrensschritte oder mehrere Verfahrensschritte wiederholt, zeitlich parallel oder in anderer Reihenfolge durchgeführt werden.

Das Verfahren ist im Wesentlichen in drei Teile untergliedert, welche zu unterschiedlichen Zeitpunkten zusammengeführt werden können. In einem ersten Verfahrenszweig wird der Gegenstand 112 hergestellt (Schritt 310). Dieser Verfahrensschritt 310 kann auch das Einbringen der Vertiefung 214 in eine Oberfläche des Gegenstands 112 umfassen, wobei, wie oben dargelegt, vorzugsweise diese Vertiefung gleich bei der Herstellung des Gegenstands selbst eingebracht wird, beispielsweise durch eine entsprechende Ausgestaltung eines Spritzgießwerkzeuges. Beispielsweise können zahlreiche derartiger Gegenstände 310 in einem Massenfertigungsprozess hergestellt werden.

In einem zweiten Zweig des Verfahrens (in Figur 3 in der Mitte dargestellt) wird der Transponder 140 hergestellt und bereitgestellt. Die Schritte dieser Herstellung sind in Figur 3 stark vereinfacht gezeigt. So umfasst dieses Verfahren beispielsweise eine Herstellung des Hochfrequenzchips 116 (Schritt 312), eine Herstellung der Antenne 118 (Schritt 314), ein Bonden des Hochfrequenzchips 116 auf die Antenne 118 mit der Trägerfolie 120 (Schritt 316) und ein Aufbringen der Abdeckschicht 122 und der ersten Klebeschicht 124 (Schritt 318).

Die in den Verfahrensschritten 312 bis 318 hergestellten Transponder 140 können beispielsweise als Bandware bereitgestellt werden und einem Etikettierprozess zugeführt werden. Hierfür wird in Verfahrensschritt 320 ein bestimmter Transponder 140 bereitgestellt. Dieser Transponder 140 kann beispielsweise einem Transponderkontrollschritt 322 unterzogen werden, beispielsweise einer Sichtprüfung und/oder einer elektrischen Prüfung gemäß der obigen Beschreibung. Schritt 322 kann beispielsweise eine Abfrage enthalten, ob der Transponder 140 fehlerfrei ist (Zweig 324 in Figur 3), in welchem Fall das Verfahren mit dem bereitgestellten Transponder fortgesetzt wird. Ist der Transponder 140 hingegen fehlerhaft (Zweig 326 in Figur 3), so kann der fehlerhafte Transponder 140 verworfen werden und ein neuer Transponder bereitgestellt werden (Rückkehr zu Schritt 320).

Mit einem fehlerfreien Transponder erfolgt dann in Schritt 328 eine Fixierung des Transponders 140 auf der Oberfläche des Gegenstands 112, beispielsweise in der oben beschriebenen Vertiefung 214.

Zeitlich parallel oder zu unterschiedlichen Zeiten zu den bislang beschriebenen Verfahrensschritten wird in einem dritten Zweig des in Figur 3 dargestellten Verfahrens das Decketikett 138 hergestellt. Diese Herstellung, welche ebenfalls in Figur 3 lediglich stark vereinfacht gezeigt ist, kann beispielsweise ein Bereitstellen der Trägerschicht 128 (Schritt 330), eine Applizierung des Laser-sensitiven Materials 130 (Schritt 332) und eine Applizierung der zweiten Klebeschicht 126 (Schritt 334) umfassen.

Wiederum können die auf diese Weise hergestellten Decketiketten 138 nach Durchführung der Verfahrensschritte 330 bis 334 beispielsweise als Bandware bereitgestellt werden, um dem Etikettierungsprozess zugeführt zu werden.

In Verfahrensschritt 336 wird das Decketikett 138 auf den Transponder 140 fixiert. Dies erfolgt beispielsweise derart, dass dieses Decketikett 138 großflächig auf den bzw. die in Verfahrensschritt 328 fixierten Transponder 140 aufgebracht wird. Beispielsweise kann ein großflächiges Decketikett 138 auf mehrere Transponder 140 aufgebracht werden.

Anschließend erfolgt in Verfahrensschritt 338 ein Ausstanzen des bzw. der Decketiketten 138, so dass beispielsweise jeweils ein Decketikett 138 von seiner lateralen Ausdehnung her im Wesentlichen einem Transponder 140 entspricht.

Das überschüssige Material des ursprünglichen großflächigen Decketiketts 138, welches nicht zur Abdeckung eines Transponders 140 benötigt wird, wird anschließend in Verfahrensschritt 340 abgegittert und aus dem Prozess entfernt.

In Figur 4 ist ein Ausführungsbeispiel einer Vorrichtung 410 gezeigt, welche beispielsweise zur Durchführung des in Figur 3 dargestellten Prozesses genutzt werden kann. Die Vorrichtung 410 geht dabei davon aus, dass die Gegenstände 112 (beispielsweise Bandkassetten) bereits als Fertig- oder Halbfertigprodukte angeliefert und einer Prozessstraße zugeführt werden. Auch die Transponder 140 können, wie oben beschrieben, als Bandware 412 angeliefert und dem Prozess gemäß Figur 4 zugeführt werden.

Die Vorrichtung weist eine Transponderkontrollvorrichtung 414 zur Kontrolle eines bereitgestellten Transponders 140 auf. Wird der Transponder 140 als fehlerfrei erkannt, so wird dieser in einer Transponderverspendevorrichtung 416, welche in Figur 4 lediglich symbolisch angedeutet ist, auf den Gegenstand 112 bzw. die Gegenstände 112 aufgebracht. Das korrekte Aufbringen bzw. Fixieren kann anschließend optional in einer Kontrollstation 418 überprüft werden.

Es sei darauf hingewiesen, dass in Figur 4 die Transponderverspendevorrichtung 416 lediglich symbolisch als Rollenvorrichtung dargestellt ist. Anstelle eines derartigen Laminierprozesses mittels eines Rollenetikettierers sind jedoch auch zahlreiche weitere Ausführungsformen der Aufbringung eines Transponders 140 denkbar, beispielsweise Pick-and-Place-Verfahren oder ähnliches.

Auch die Decketiketten 138 werden, wie oben beschrieben, in der in Figur 4 dargestellten Vorrichtung 410 als Bandware 420 angeliefert und dem Prozess zugeführt. Wie bei den Transpondern 140 ist jedoch auch diesbezüglich eine hiervon abweichende Verfahrensgestaltung möglich, beispielsweise ein Pick-and-Place-Verfahren.

Die Decketiketten werden in einer Decketikettverspendevorrichtung 422 auf die Gegenstände 112 aufgebracht, wobei, wie oben dargelegt, vorzugsweise ein großflächiges Aufbringen erfolgt. Anschließend können die Decketiketten 138 in einer Stanze 424 ausgestanzt werden. Überschüssiges Material der Decketiketten 138 kann anschließend in einer Abgittervorrichtung 426 abgezogen und einer Abfalltrommel 428 zugeführt werden.

Damit sind die Gegenstände 112, beispielsweise die Bandkassetten, fertig etikettiert und das Hochfrequenzetikett 110 auf jedem Gegenstand 112 hergestellt. Die Gegenstände können der Vorrichtung 410 entnommen werden. Alternativ oder zusätzlich kann die Vorrichtung 410 jedoch auch einen Laserbeschrifter 430, welcher beispielsweise einen CO₂-Laser umfasst, und/oder eine Lese-/Schreibstation 432 zum Einschreiben von Informationen in die Transponder 140 umfassen. Der Laserbeschrifter 430 und die Lese-/Schreibstation 432 können auch beispielsweise in einem einzelnen Gerät zusammengefasst sein.

Es sei darauf hingewiesen, dass Figur 4 lediglich eine mögliche Ausführungsform der Vorrichtung 410 symbolisch darstellt. Die einzelnen Bestandteile der Vorrichtung 410 bzw. deren Ausgestaltung sind dem Fachmann, beispielsweise einem Fertigungsingenieur, bekannt. Weiterhin ist in Figur 4 ein vollständig automatisierter, kontinuierlicher Verfahrensablauf gezeigt. Es können jedoch auch mehrere Teilverfahren durchgeführt werden, beispielsweise im Rahmen eines diskontinuierlichen Prozesses. Weiterhin können, alternativ oder zusätzlich, an Stelle eines vollautomatisierten Prozesses beispielsweise teilweise auch manuelle Prozessschritte durchgeführt werden.

### Bezugszeichenliste

- 110: Hochfrequenzetikett
- 112: Gegenstand
- 114: Inlay
- 116: Hochfrequenzchip
- 118: Antenne
- 120: Trägerfolie
- 122: Abdeckschicht
- 124: erste Klebeschicht
- 126: zweite Klebeschicht
- 128: Trägerschicht
- 130: Laser-sensitives Material
- 132: beschriftbare Oberfläche
- 134: Laser
- 136: Laserstrahlung
- 138: Decketikett
- 140: Transponder
- 210: Laminierung
- 212: Trennung
- 214: Vertiefung
- 216: zentrale Aussparung
- 218: flache Aussparung
- 310: Herstellung des Gegenstandes
- 312: Herstellung des Hochfrequenzchips
- 314: Herstellung der Antenne
- 316: Bonden
- 318: Aufbringen Abdeckschicht und erste Klebeschicht
- 320: Bereitstellen Transponder
- 322: Transponderkontrollschritt
- 324: fehlerfreier Transponder
- 326: fehlerhafter Transponder
- 328: Fixierung Transponder
- 330: Bereitstellen
- 332: Applizierung des Laser-sensitiven Materials
- 334: Applizierung zweite Klebeschicht
- 336: Fixierung Decketikett
- 338: Ausstanzen Decketikett
- 340: Abgittern
- 410: Vorrichtung zur Erzeugung eines Hochfrequenzetikettes
- 412: Bandware Transponder
- 414: Transponderkontrollvorrichtung
- 416: Transponderverspendevorrichtung
- 418: Kontrollstation
- 420: Bandware Deckschicht
- 422: Decketikettverspendevorrichtung
- 424: Stanze
- 426: Abgittervorrichtung
- 428: Abfalltrommel
- 430: Laserbeschrifter
- 432: Lese-/Schreibstation

## Patentansprüche

1. Verfahren zur Herstellung eines Hochfrequenzetiketts (110) auf einem Gegenstand (112), wobei das Verfahren folgende Schritte aufweist:
- mindestens ein Transponder (140) wird auf einer Oberfläche des Gegenstandes (112) fixiert, wobei der Transponder (140) mindestens einen Hochfrequenzchip (116) sowie mindestens eine Antenne (118) und mindestens eine Trägerfolie (120) aufweist;
- mindestens ein Decketikett (138) wird auf dem Transponder (140) fixiert, wobei das Decketikett (138) mindestens eine von dem Transponder (140) weg weisende beschriftbare Oberfläche (132) aufweist.

2. Verfahren nach dem vorhergehenden Anspruch, wobei der mindestens eine Transponder (140) und das mindestens eine Decketikett (138) in unterschiedlichen Verfahrensschritten hergestellt werden, wobei in einem ersten Fixierungsschritt der Transponder (140) auf der Oberfläche des Gegenstandes (112) fixiert wird und in einem anschließenden zweiten Fixierungsschritt das Decketikett (138) auf dem Transponder (140) fixiert wird.

3. Verfahren nach dem vorhergehenden Anspruch, wobei der Transponder (140) vor und/oder nach dem ersten Fixierungsschritt einem Transponderkontrollschritt unterzogen wird, wobei überprüft wird, ob der Transponder (140) fehlerhaft ist.

4. Verfahren nach dem vorhergehenden Anspruch, wobei als fehlerhaft erkannte Transponder (140) aussortiert werden, bevor ein Decketikett (138) aufgebracht wird.

5. Verfahren nach einem der drei vorhergehenden Ansprüche, wobei das Decketikett (138) vor und/oder nach dem zweiten Fixierungsschritt einem Etikettenkontrollschritt unterzogen wird, wobei überprüft wird, ob das Decketikett (138) fehlerhaft ist.

6. Verfahren nach dem vorhergehenden Anspruch, wobei als fehlerhaft erkannte Decketiketten (138) aussortiert werden, bevor diese auf dem Transponder (140) fixiert werden.

7. Verfahren nach einem der vorhergehenden Ansprüche, wobei der Transponder (140) eine erste Klebeschicht (124) zur Fixierung des Transponders (140) auf der Oberfläche des Gegenstands (112) aufweist.

8. Verfahren nach dem vorhergehenden Anspruch, wobei die erste Klebeschicht (124) einen Acrylatkleber aufweist.

9. Verfahren nach einem der vorhergehenden Ansprüche, wobei die erste Klebeschicht (124) eine Dicke von 5 Mikrometern bis 100 Mikrometern und vorzugsweise von 20 Mikrometern aufweist.

10. Verfahren nach einem der vorhergehenden Ansprüche, wobei der Transponder (140) eine Abdeckschicht (122) zur Abdeckung des Hochfrequenzchips (116) aufweist.

11. Verfahren nach dem vorhergehenden Anspruch, wobei die Abdeckschicht (122) eine PET-Folie aufweist.

12. Verfahren nach einem der vorhergehenden Ansprüche, wobei die Antenne (118) mindestens eine der folgenden Antennen aufweist: eine Kupferantenne; eine Aluminiumantenne; eine Goldantenne.

13. Verfahren nach einem der vorhergehenden Ansprüche, wobei das Decketikett (138) eine zweite Klebeschicht (126) aufweist, mittels derer das Decketikett (138) auf dem Transponder (140) fixierbar ist.

14. Verfahren nach dem vorhergehenden Anspruch, wobei die zweite Klebeschicht (126) einen Acrylatkleber aufweist.

15. Verfahren nach einem der vorhergehenden Ansprüche, wobei ein großflächiges Decketikett (138) auf dem Transponder (140) fixiert wird, wobei anschließend das Decketikett (138) gestanzt und abgegittert wird.

16. Verfahren nach einem der vorhergehenden Ansprüche, wobei die beschriftbare Oberfläche (132) mittels mindestens eines der folgenden Beschriftungsverfahren beschriftbar ist:
- mit einem Laserbeschriftungsverfahren;
- mit einem Laserdruckverfahren;
- mit einem Thermotransferdruckverfahren;
- mit einem Tintenstrahldruckverfahren.

17. Verfahren nach einem der vorhergehenden Ansprüche, wobei das Decketikett (138) mindestens eine Laser-sensitive Schicht (130) aufweist, welche ausgestaltet ist, um mindestens eine optisch wahrnehmbare Eigenschaft bei einer Einwirkung eines Laserstrahls zu ändern.

18. Verfahren nach dem vorhergehenden Anspruch, wobei bei der Einwirkung des Laserstrahls mindestens eine der folgenden Wirkungen auftritt: eine Farbänderung, insbesondere eine Farbänderung aufgrund einer thermochemischen Reaktion und/oder eines Thermochromieeffektes; ein Materialabtrag, wobei bei dem Materialabtrag mindestens ein Teil der Laser-sensitiven Schicht abgetragen wird; ein Ätzschritt, wobei bei dem Ätzschritt mindestens ein Teil der Laser-sensitiven Schicht verdampft wird.

19. Verfahren nach einem der beiden vorhergehenden Ansprüche, wobei die Laser-sensitive Schicht (130) eine Sensitivität bei mindestens einer der Laserwellenlängen von 1064 nm und 10,6 µm aufweist.

20. Verfahren nach einem der drei vorhergehenden Ansprüche, wobei die Laser-sensitive Schicht (130) mindestens ein thermochemisches Material aufweist, insbesondere ein thermochromes Material.

21. Verfahren nach einem der vier vorhergehenden Ansprüche, wobei die Laser-sensitive Schicht (130) eine Schichtdicke von 0,3 Mikrometern bis 10 Mikrometern, insbesondere von 2,5 Mikrometern, aufweist.

22. Verfahren nach einem der vorhergehenden Ansprüche, wobei das Decketikett (138) mindestens ein Abdeckmaterial als Trägerschicht (128) aufweist, wobei das Abdeckmaterial mindestens eines der folgenden Materialien aufweist: ein Papiermaterial; ein Kunststoffmaterial, insbesondere ein PET-Material.

23. Verfahren nach einem der vorhergehenden Ansprüche, wobei vor dem Fixieren des Transponders (140) auf der Oberfläche mindestens eine Vertiefung (214) in die Oberfläche des Gegenstandes (112) eingebracht wird, wobei die Vertiefung (214) ausgestaltet ist, um den Transponder (140) ganz oder teilweise aufzunehmen.

24. Verfahren nach dem vorhergehenden Anspruch, wobei die Vertiefung (214) derart dimensioniert wird, dass die beschriftbare Oberfläche (132) im Wesentlichen eben ist.

25. Verfahren nach einem der vorhergehenden Ansprüche, wobei der Gegenstand (112) mindestens eine Verpackung für mindestens ein Testelement zum Nachweis mindestens eines Analyten in einer Probe aufweist, wobei das Testelement eingerichtet ist, um bei Anwesenheit des Analyten mindestens eine nachweisbare Eigenschaft zu ändern.

26. Verfahren nach dem vorhergehenden Anspruch, weiterhin aufweisend mindestens einen Schreibschritt, wobei in dem mindestens einen Schreibschritt mindestens eine Information in den Transponder (140) eingeschrieben wird, wobei die mindestens eine Information mindestens eine Information über das mindestens eine Testelement enthält, insbesondere eine Chargeninformation.

27. Verfahren nach dem vorhergehenden Anspruch, weiterhin aufweisend mindestens einen Beschriftungsschritt, wobei die beschriftbare Oberfläche (132) mit einer optisch wahrnehmbaren Information beschriftet wird.

28. Verfahren nach den beiden vorhergehenden Ansprüchen, wobei der Beschriftungsschritt und der Schreibschritt zumindest näherungsweise gleichzeitig durchgeführt werden.

29. Vorrichtung (410) zur Herstellung eines Hochfrequenzetiketts (110) auf einem Gegenstand (112), insbesondere nach einem Verfahren gemäß einem der vorhergehenden Ansprüche, wobei die Vorrichtung (410) mindestens eine Transponderverspendevorrichtung (416) aufweist, um einen Transponder (140) mit mindestens einem Hochfrequenzchip (116), mit mindestens einer Antenne (118) und mit mindestens einer Trägerfolie (120) auf einer Oberfläche eines Gegenstandes (112) zu fixieren, wobei die Vorrichtung (410) weiterhin mindestens eine Decketikettverspendevorrichtung (422) aufweist, welche eingerichtet ist, um auf dem auf der Oberfläche des Gegenstandes (112) fixierten Transponder (140) mindestens ein Decketikett (138) mit mindestens einer von dem Transponder (140) weg weisenden beschriftbaren Oberfläche (132) zu fixieren.

30. Vorrichtung (410) nach dem vorhergehenden Anspruch, wobei die Vorrichtung (410) weiterhin mindestens eine Transponderkontrollvorrichtung (414) aufweist, um fehlerhafte Transponder (140) zu erkennen und auszusortieren.

31. Vorrichtung (410) nach einem der beiden vorhergehenden Ansprüche, wobei die Vorrichtung (410) weiterhin mindestens eine Etikettenkontrollvorrichtung aufweist, um fehlerhafte Decketiketten (138) zu erkennen und auszusortieren.
